# EUROPÄISCHE PATENTSCHRIFT

(11) **EP 3 175 276 B1**
(45) Veröffentlichungstag und Bekanntmachung des Hinweises auf die Patenterteilung: **09.03.2022**
(21) Anmeldenummer: 15742240.3
(22) Anmeldetag: 24.07.2015
(51) Int. Cl.: G02B 7/02

(54) **OPTISCHE VORRICHTUNG UMFASSEND EINE MIKROOPTIK UND EINEN HALTER UND VERFAHREN ZUR HERSTELLUNG EINER OPTISCHEN VORRICHTUNG**
OPTICAL DEVICE COMPRISING A MICRO-OPTICAL SYSTEM AND A RETAINER, AND METHOD FOR PRODUCING AN OPTICAL DEVICE
DISPOSITIF OPTIQUE COMPRENANT UN SYSTÈME MICRO-OPTIQUE ET UN SUPPORT ET PROCÉDÉ DE FABRICATION D'UN DISPOSITIF OPTIQUE

(30) Priorität: 31.07.2014 DE 102014215105
(43) Veröffentlichungstag der Anmeldung: 07.06.2017
(73) Patentinhaber: Ferdinand-Braun-Institut gGmbH, Leibniz-Institut für Höchstfrequenztechnik, 12489 Berlin (DE); Bawamia, Ahmad Ibrahim, 13051 Berlin (DE); Kürbis, Christian, 12487 Berlin (DE); Wicht, Andreas, 12459 Berlin (DE)
(72) Erfinder: BAWAMIA, Ahmad Ibrahim, 12489 Berlin (DE); KÜRBIS, Christian, 12487 Berlin (DE); WICHT, Andreas, 12459 Berlin (DE)
(74) Vertreter: Gulde & Partner
(86) Internationale Anmeldenummer: PCT/EP2015/067018
(87) Internationale Veröffentlichungsnummer: WO 2016/016132

(56) Entgegenhaltungen:
- EP-A2- 0 519 219
- WO-A1-2012/013512
- CA-A1- 2 313 357
- DE-A1- 19 602 636
- DE-A1- 19 805 849
- JP-A- S6 168 734
- JP-A- 2008 010 492
- US-A- 5 408 493

## Beschreibung

Die vorliegende Erfindung betrifft eine optische Vorrichtung umfassend eine Mikrooptik und einen Halter und ein Verfahren zur Herstellung einer optischen Vorrichtung.

Zur Mikrointegration einer Mikrooptik ist es erforderlich, die Mikrooptik auf einem Halter so zu fixieren, dass die optische Achse der Mikrooptik justiert ist.

In US 7,003,211 B2 wird eine Justierung mit Hilfe der LIGA-Technologie beschrieben, die auf einer Kombination von Tiefenfotolithographie, Galvanik und Mikroabformung basiert.

DE 195 33 426 A1 realisiert justierbare Strukturen mittels der O-SMD (optical surfacemounted devices) Tripod-Technologie.

Zum Fixieren von Mikrooptiken wird in DE 197 51 352 A1 ein Löten mit Laser Reflow Löttechnik vorgeschlagen.

DE 103 47 450 beschreibt ein Keramiksubstrat mit integrierten mechanischen Strukturen.

Ein Fuse bonding mit einer Kerben- oder Rillenstruktur wird in EP 1 345 059 A1 offenbart.

JP H08 15 25 47 schlägt einen Einschnitt-Nadel-Halter in einer Kerbe vor.

JP 2008 010492 A betrifft die Bereitstellung eines Halters für lichtemittierende Elemente, der sich für die Wärmeableitung von Halbleiterlasern eignet und in der Lage ist, eine ausreichende Haftfestigkeit sicherzustellen.

WO 2012/013512 A1 behandelt das Fixieren eines in zwei Raumrichtungen justierbaren Optikhalters mit einem schrumpfenden Kleber.

US 5 408 493 A offenbart eine Vorrichtung und ein Verfahren zur Einstellung der optischen Achse eines Halbleiterlasers.

Die Erfinder haben erkannt, dass die Justierung der optischen Achse einer Mikrooptik noch vereinfacht und verbessert werden kann.

Daher wird erfindungsgemäß eine optische Vorrichtung gemäß Anspruch 1 mit einer Mikrooptik und einem Halter und ein Verfahren gemäß Anspruch 6 zur Herstellung einer optischen Vorrichtung vorgestellt.

Die vorliegende Erfindung betrifft eine optische Vorrichtung umfassend eine Mikrooptik und einen Halter und ein Verfahren zur Herstellung einer optischen Vorrichtung.

Bei der erfindungsgemäßen Vorrichtung ist die Mikrooptik bezüglich einer Oberfläche des Halters ausgerichtet fixiert. Die Vorrichtung ist dadurch gekennzeichnet, dass der Halter eine runde, sich verjüngende Vertiefung aufweist und die Mikrooptik auf einer Kugelkalotte fixiert ist und die Kugelkalotte am Halter fixiert ist, wobei die Kugelkalotte zumindest teilweise in die Vertiefung hineinragt und auf einer Teilfläche der Vertiefung entlang einer Auflagelinie auf der Teilfläche oder einer Kante in der Vertiefung aufliegt, wobei die Kugelkalotte in der Vertiefung am Halter fixiert ist, jedoch nicht dort fixiert ist, wo sie aufliegt, wobei die Kugelkalotte mittels eines Klebemittels an einer zwischen der Vertiefung und der Kugelkalotte ausgebildeten Spalte über der Auflagelinie oder der Kante in der Vertiefung, auf der die Kugelkalotte aufliegt, fixiert ist.

Da die Kugelkalotte nicht dort fixiert ist, wo sie aufliegt, kann Schrumpfen eines Fixierungsmittels keine Verschiebung oder Verdrehung der Kugelkalotte relativ zum Halter und damit keine Dejustierung bewirken.

In vorteilhaften Ausführungsformen der Vorrichtung liegt die Kugelkalotte entlang einer Auflagelinie entweder auf der Fläche eines der Halteroberfläche näheren, kegelabschnittförmigen Teils der Vertiefung oder auf einer Kante einer Stufe in der Vertiefung auf, wobei eine Fixierung die Auflagelinie umgibt.

Der sich in dieser Ausführungsform um die Auflagelinie herum ergebende Spalt ist besonders schmal ausgestaltbar, so dass wenig Fixiermittel ausreicht.

Die Fixierung kann an die Auflagelinie heranreichen.

Insbesondere ist die Kugelkalotte mittels eines Klebemittels fixiert.

Das erfindungsgemäße Verfahren basiert auf einem Halter, der eine runde, sich verjüngende Vertiefung aufweist, und umfasst:
Aufsetzen einer Basisfläche der Mikrooptik auf eine ebene Seite einer Kugelkalotte,
Aufsetzen der Kugelkalotte in die Vertiefung, so dass die Kugelkalotte zumindest teilweise in die Vertiefung hineinragt und unmittelbar auf einer Kante in der Vertiefung oder auf einer Teilfläche der Vertiefung entlang einer Auflagelinie auf der Teilfläche aufliegt,
Ausrichten der Mikrooptik, und
Fixieren der Mikrooptik auf der Kugelkalotte und Fixieren der Kugelkalotte am Halter dort, wo sie nicht aufliegt, wobei die Kugelkalotte mittels eines Klebemittels an einer zwischen der Vertiefung und der Kugelkalotte ausgebildeten Spalte über der Auflagelinie oder der Kante in der Vertiefung, auf der die Kugelkalotte aufliegt, fixiert ist.

In vorteilhaften Ausführungsformen der Vorrichtung liegt die Kugelkalotte entlang einer Auflagelinie entweder auf der Fläche eines der Halteroberfläche näheren, kegelabschnittförmigen Teils der Vertiefung oder auf einer Kante einer Stufe in der Vertiefung auf, wobei eine Fixierung die Auflagelinie umgibt.

Das Fixieren erfolgt mittels eines Klebemittels.

Das Ausrichten der Mikrooptik kann Verschieben der Mikrooptik auf der ebenen Seite und/oder Drehen der Kugelkalotte umfassen.

Weitere vorteilhafte Ausführungsformen sind in den abhängigen Ansprüchen spezifiziert und/oder ergeben sich aus den nachfolgend mit Bezug zu den Figuren beschriebenen Ausführungsbeispielen. In den Figuren zeigt
- Figur 1: ein erstes Ausführungsbeispiel im vertikalen Schnitt,
- Figur 2: ein zweites Ausführungsbeispiel im vertikalen Schnitt, und
- Figur 3: ein drittes Ausführungsbeispiel im vertikalen Schnitt.

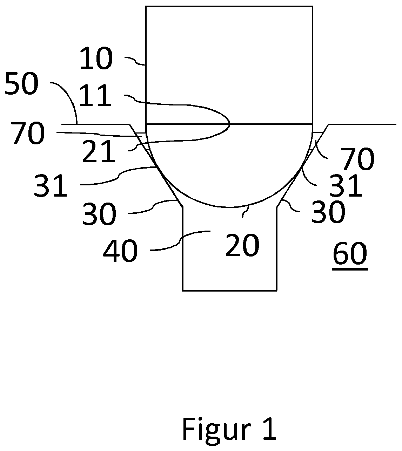

Figur 1 zeigt ein erstes Ausführungsbeispiel im vertikalen Schnitt. Eine Mikrooptik 10 ist mit einer ebenen Seite 11 mit einer entsprechenden ebenen Seite 21 einer Kugelkalotte 20 verbunden. Die Kugelkalotte 20 liegt auf einer Auflagelinie 31 auf einer gegenüber einer Oberfläche 50 eines Halters 60 geneigten Teilfläche 30 einer im horizontalen Schnitt kreisrunden Vertiefung 40 (Loch) in der Oberfläche 50 auf. Die Teilfläche 30 bildet also eine Fase der Vertiefung 40.

Im ersten Ausführungsbeispiel ist also ein der Oberfläche 50 des Halters 60 näherer Teil der Vertiefung 40 kegelabschnittsförmig und ein verbleibender Teil kreiszylinderförmig.

Die Kugelkalotte 20 ist mit Hilfe von Kleber 70 an der Teilfläche 30 und damit am Halter 50 fixiert. Im ersten Ausführungsbeispiel ragt die Kugelkalotte 20 vollständig in die Vertiefung 40 hinein.

Im Ausführungsbeispiel umgibt der Kleber 70 die Auflagelinie 31 vollständig. Die Erfindung ist aber weder auf ein Fixierung mittels Kleber noch auf ein vollständiges Umgeben der Auflagelinie mit Fixiermittel beschränkt.

Die Kugelkalotte kann mit ihrer kugelförmigen Seite so in die Vertiefung eingesetzt werden, dass sie ganz oder teilweise in die Vertiefung hineinragt. Die ebene Seite 21 der Kugelkalotte 20 ermöglicht, auf diese eine Basisfläche 11 der Mikrooptik 10 aufzusetzen und durch Verschieben die Mikrooptik 10 translatorisch bezüglich dem Halter 60 auszurichten. Nach Fixieren der Mikrooptik 10 auf der Kugelkalotte 20 kann die Mikrooptik 10 rotatorisch bezüglich des Halters 60 ausgerichtet werden. Da Rotationen um kleine Winkel im Wesentlichen als tangentiale Translation wirken, kann eine translatorische Nachausrichtung erfolgen. Es ist auch möglich, dass die Mikrooptik 10 lediglich durch Verschieben auf der Kugelkalotte 20, lediglich durch Rotationen um kleine Winkel nach Fixieren auf der Kugelkalotte 20 oder durch beides translatorisch bezüglich des Halters 60 ausgerichtet wird.

Es ist auch möglich, zuerst die Kugelkalotte am Halter so zu fixieren, dass die ebene Seite 21 der Kugelkalotte 20 eine definierte Ausrichtung zum Halter besitzt und dann die Mikrooptik auf der Kugelkalotte 20 translatorisch in der Ebene der ebenen Seite 21 und rotatorisch um die Flächennormale der ebenen Seite 21 auszurichten und zu fixieren.

Durch Drehen der Kugelkalotte 20 um größere Winkel kann die fixierte Mikrooptik 10 rotatorisch bezüglich dem Halter 60 ausgerichtet werden. Dabei sind Rotationen um drei zueinander senkrechte Drehachsen und Verschiebungen entlang zweier zueinander senkrechter Verschiebungsachsen möglich.

Schließlich wird die ausgerichtete Mikrooptik 10 auf der Kugelkalotte 20 fixiert und die Kugelkalotte 20 wird auf dem Halter fixiert, wobei der Kleber 70 die Kugelkalotte 20 dort an der Teilfläche 30 fixiert, wo die Kugelkalotte 20 nicht aufliegt.

Da die Kugelkalotte 20 nicht dort fixiert ist, wo sie aufliegt, ist sichergestellt, dass durch die Fixierung keine Veränderung der Ausrichtung erfolgen kann.

Die Fixierung kann beispielsweise mit flüssigem Klebstoff 70 erfolgen. Dieser kann lokal an einer Stelle in den sich zur Oberfläche 50 hin öffnenden Bereich (Klebefuge) zwischen die Kugelkalotte 20 und der Teilfläche 30 appliziert werden. Auf Grund von Kapillarkräften verteilt sich der flüssige Klebstoff 70 dann gleichmäßig in der gesamten Klebefuge. Der Klebstoff 70 umgibt schließlich die gesamte Kugelkalotte gleichmäßig und ringförmig. Der flüssige Klebstoff 70 dringt aber nicht zwischen die Kugelkalotte 20 und die Teilfläche 30 entlang der Auflagelinie 31. Volumenänderungen des Klebstoffs 70, die sich durch ein Aushärten ergeben können, wirken dann gleichmäßig auf die Mikrooptik, so dass keine Winkeldejustage auftritt.

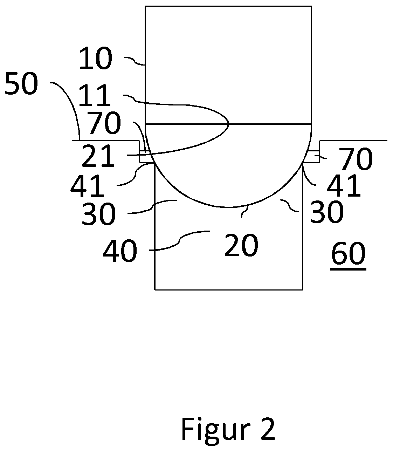

Figur 2 zeigt ein zweites Ausführungsbeispiel im vertikalen Schnitt. Wieder ist eine Mikrooptik 10 mit einer ebenen Seite 11 mit einer entsprechenden ebenen Seite 21 einer Kugelkalotte 20 verbunden. Die Kugelkalotte 20 liegt auf einer Kante 41 einer Stufe einer im horizontalen Schnitt kreisrunden Vertiefung 40 in einer Oberfläche 50 eines Halters 60 auf. Die Kugelkalotte 20 ist mit Hilfe von Kleber 70 auf der Stufe und damit am Halter 50 fixiert. Im zweiten Ausführungsbeispiel ragt die Kugelkalotte 20 nur teilweise in die Vertiefung 40 hinein.

Wieder ist die Kugelkalotte 20 nicht dort fixiert, wo sie aufliegt. So ist auch im zweiten Ausführungsbeispiel sichergestellt, dass durch Fixierung nach der Ausrichtung keine Veränderung der Ausrichtung erfolgen kann.

Die Vertiefung des zweiten Ausführungsbeispiels ist leichter herzustellen.

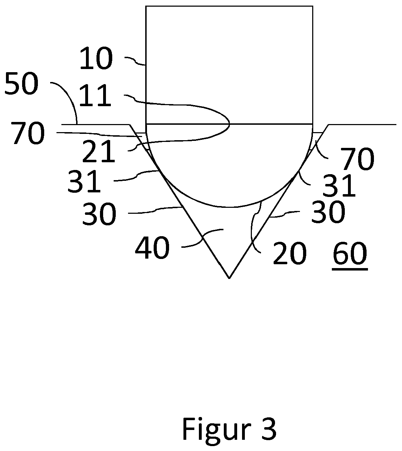

Das dritte Ausführungsbeispiel wie es in Figur 3 dargestellt ist, unterscheidet sich vom ersten Ausführungsbeispiel lediglich dadurch, dass die Vertiefung 40 vollständig als kegelförmige Bohrung ausgeführt ist.

Die Vertiefungen sind in den Ausführungsbeispielen so dargestellt, dass sie den Halter nicht vollständig durchdringen. Sie sind also als Sacklöcher dargestellt. Im Sinne der Erfindung sind jedoch auch den Halter vollständig durchdringende Vertiefungen (Durchgangslöcher) möglich.

## Patentansprüche

1. Optische Vorrichtung umfassend eine Mikrooptik (10) und einen Halter (60), wobei die Mikrooptik (10) bezüglich einer Oberfläche (50) des Halters (60) ausgerichtet fixiert ist, **dadurch gekennzeichnet, dass** der Halter (60) eine runde, sich verjüngende Vertiefung (40) aufweist und die Mikrooptik (10) auf einer Kugelkalotte (20) fixiert ist und die Kugelkalotte (20) am Halter (60) fixiert ist, wobei die Kugelkalotte (20) zumindest teilweise in die Vertiefung (40) hineinragt und auf einer Teilfläche (30) der Vertiefung (40) entlang einer Auflagelinie (31) auf der Teilfläche (30) oder einer Kante (41) in der Vertiefung (40) unmittelbar aufliegt, wobei die Kugelkalotte (20) in der Vertiefung (40) am Halter (60) fixiert ist, jedoch nicht dort fixiert ist, wo sie aufliegt, wobei die Kugelkalotte (20) mittels eines Klebemittels an einer zwischen der Vertiefung (40) und der Kugelkalotte (20) ausgebildeten Spalte über der Auflagelinie (31) oder der Kante (41) in der Vertiefung (40), auf der die Kugelkalotte (20) aufliegt, fixiert ist.

2. Vorrichtung nach Anspruch 1, wobei die Fläche (30) einen der Halteroberfläche (50) näheren, kegelabschnittförmigen Teil der Vertiefung (40) bildet und die Kugelkalotte (20) entlang einer Auflagelinie (31) auf der Fläche (30) aufliegt, wobei eine Fixierung (70) die Auflagelinie umgibt.

3. Vorrichtung nach Anspruch 1, wobei die Kante (41) eine Stufe in der Vertiefung (40) bildet, wobei eine Fixierung (70) auf der Stufe angeordnet ist.

4. Vorrichtung nach Anspruch 2 oder 3, wobei die Fixierung (70) an die Auflagelinie (31, 41) heranreicht.

5. Verfahren zur Herstellung einer optischen Vorrichtung umfassend eine Mikrooptik (10) und einen Halter (60), wobei der Halter (60) eine runde, sich verjüngende Vertiefung (40) aufweist, umfassend:
• Aufsetzen einer Basisfläche (11) der Mikrooptik auf eine ebene Seite (21) einer Kugelkalotte (20),
• Aufsetzen der Kugelkalotte (20) in die Vertiefung (40), so dass die Kugelkalotte (20) zumindest teilweise in die Vertiefung (40) hineinragt und unmittelbar auf einer Kante (41) in der Vertiefung (40) oder auf einer Teilfläche (30) der Vertiefung (40) entlang einer Auflagelinie (31) auf der Teilfläche (30) aufliegt,
• Ausrichten der Mikrooptik (10), und
• Fixieren der Mikrooptik (10) auf der Kugelkalotte (20) und Fixieren der Kugelkalotte (20) in der Vertiefung (40) am Halter (60), jedoch nicht dort, wo sie aufliegt, wobei die Kugelkalotte (20) mittels eines Klebemittels an einer zwischen der Vertiefung (40) und der Kugelkalotte (20) ausgebildeten Spalte über der Auflagelinie (31) oder der Kante (41) in der Vertiefung (40), auf der die Kugelkalotte (20) aufliegt, fixiert ist.

6. Verfahren nach Anspruch 5, wobei die Fläche (30) einen der Halteroberfläche (50) näheren, kegelabschnittförmigen Teil der Vertiefung (40) bildet und die Kugelkalotte (20) entlang einer Auflagelinie (31) auf der Fläche (30) aufliegt, wobei eine Fixierung (70) die Auflagelinie (31) umgibt.

7. Verfahren nach Anspruch 5, wobei die Kante (41) eine Stufe in der Vertiefung (40) bildet, wobei eine Fixierung (70) auf der Stufe angeordnet ist.

8. Verfahren nach einem der Ansprüche 5 bis 7, wobei das Ausrichten der Mikrooptik (10) umfasst: Verschieben der Mikrooptik auf der ebene Seite (21) und/oder Drehen der Kugelkalotte (20).

## Claims

1. An optical device comprising a micro-optical system (10) and a retainer (60), wherein the micro-optical system (10) is attached to the retainer (60) so as to be aligned relative to a surface (50) thereof, **characterized in that** the retainer (60) has a round, tapered recess (40) and the micro-optical system (10) is attached on a spherical cap (20) and the spherical cap (20) is attached to the retainer (60), wherein the spherical cap (20) at least partially protrudes into the recess (40) and rests directly on a partial surface (30) of the recess (40) along a resting line (31) on the partial surface (30) or an edge (41) in the recess (40), wherein the spherical cap (20) is attached to the retainer (60) in the recess (40), but is not attached where it rests, wherein the spherical cap (20) is attached by means of an adhesive at a gap formed between the recess (40) and the spherical cap (20) above the resting line (31) or the edge (41) in the recess (40) on which the spherical cap (20) rests.

2. The device according to Claim 1, wherein the surface (30) forms a part of the recess (40) which is closer to the retainer surface (50) and shaped like a part of a cone and the spherical cap (20) rests on the surface (30) along a resting line (31), wherein an attachment (70) surrounds the resting line.

3. The device according to Claim 1, wherein the edge (41) forms a step in the recess (40), wherein an attachment (70) is arranged on the step.

4. The device according to Claim 2 or 3, wherein the attachment (70) reaches the resting line (31, 41).

5. A method for producing an optical device comprising a micro-optical system (10) and a retainer (60), wherein the retainer (60) has a round, tapered recess (40), comprising:
▪ placing a base surface (11) of the micro-optical system onto a planar side (21) of a spherical cap (20),
▪ placing the spherical cap (20) into the recess (40) so that the spherical cap (20) at least partially protrudes into the recess (40) and rests directly on an edge (41) in the recess (40) or on a partial surface (30) of the recess (40) along a resting line (31) on the partial surface (30),
▪ aligning the micro-optical system (10), and
▪ attaching the micro-optical system (10) on the spherical cap (20) and attaching the spherical cap (20) to the retainer (60) in the recess (40), but not where it rests, wherein the spherical cap (20) is attached by means of an adhesive at a gap formed between the recess (40) and the spherical cap (20) above the resting line (31) or the edge (41) in the recess (40) on which the spherical cap (20) rests.

6. The method according to Claim 5, wherein the surface (30) forms a part of the recess (40) which is closer to the retainer surface (50) and shaped like a part of a cone and the spherical cap (20) rests on the surface (30) along a resting line (31), wherein an attachment (70) surrounds the resting line (31).

7. The method according to Claim 5, wherein the edge (41) forms a step in the recess (40), wherein an attachment (70) is arranged on the step.

8. The method according to any one of Claims 5 to 7, wherein aligning the micro-optical system (10) comprises: displacing the micro-optical system on the planar side (21) and/or rotating the spherical cap (20).

## Revendications

1. Dispositif optique comprenant un système micro-optique (10) et un support (60), le système micro-optique (10) étant fixée en étant orientée par rapport à une surface (50) du support (60), **caractérisé en ce que** le support (60) présente un creux circulaire qui se rétrécit (40) et le système micro-optique (10) est fixée sur une calotte sphérique (20) et la calotte sphérique (20) est fixée au support (60), la calotte sphérique (20) pénétrant au moins partiellement dans le creux (40) et reposant directement sur une surface partielle (30) du creux (40) le long d'une ligne d'appui (31) sur la surface partielle (30) ou d'un bord (41) dans le creux (40), la calotte sphérique (20) étant fixée au support (60) dans le creux (40), mais n'étant pas fixée à l'endroit où elle repose, la calotte sphérique (20) étant fixée au moyen d'un agent adhésif au niveau d'un interstice formé entre le creux (40) et la calotte sphérique (20) au-dessus de la ligne d'appui (31) ou du bord (41) dans le creux (40) sur lequel repose la calotte sphérique (20).

2. Dispositif selon la revendication 1, dans lequel la surface (30) forme une partie du creux (40) en forme de section conique plus proche de la surface de support (50) et la calotte sphérique (20) repose sur la surface (30) le long d'une ligne d'appui (31), une fixation (70) entourant la ligne d'appui.

3. Dispositif selon la revendication 1, dans lequel le bord (41) forme un gradin dans le creux (40), une fixation (70) étant agencée sur le gradin.

4. Dispositif selon la revendication 2 ou 3, dans lequel la fixation (70) s'étend jusqu'à la ligne d'appui (31, 41).

5. Procédé de fabrication d'un dispositif optique comprenant un système micro-optique (10) et un support (60), le support (60) présentant un creux circulaire qui se rétrécit (40), comprenant :
- la mise en place d'une surface de base (11) du système micro-optique sur un côté plan (21) d'une calotte sphérique (20),
- la mise en place de la calotte sphérique (20) dans le creux (40), de telle sorte que la calotte sphérique (20) pénètre au moins partiellement dans le creux (40) et repose directement sur un bord (41) dans le creux (40) ou sur une surface partielle (30) du creux (40) le long d'une ligne d'appui (31) sur la surface partielle (30),
- l'orientation du système micro-optique (10), et
- la fixation du système micro-optique (10) sur la calotte sphérique (20) et la fixation de la calotte sphérique (20) dans le creux (40) sur le support (60), mais pas à l'endroit où elle repose, la calotte sphérique (20) étant fixée au moyen d'un agent adhésif au niveau d'un interstice formé entre le creux (40) et la calotte sphérique (20) au-dessus de la ligne d'appui (31) ou du bord (41) dans le creux (40) sur lequel repose la calotte sphérique (20).

6. Procédé selon la revendication 5, dans lequel la surface (30) forme une partie du creux (40) en forme de section conique plus proche de la surface de support (50) et la calotte sphérique (20) repose sur la surface (30) le long d'une ligne d'appui (31), une fixation (70) entourant la ligne d'appui (31).

7. Procédé selon la revendication 5, dans lequel le bord (41) forme un gradin dans le creux (40), une fixation (70) étant agencée sur le gradin.

8. Procédé selon l'une quelconque des revendications 5 à 7, dans lequel l'orientation du système micro-optique (10) comprend : le déplacement du système micro-optique sur le côté plan (21) et/ou la rotation de la calotte sphérique (20).
